# EUROPEAN PATENT APPLICATION

(11) **EP 3 524 947 A1**
(43) Date of publication of application: **14.08.2019**
(21) Application number: 18214423.8
(22) Date of filing: 20.12.2018
(51) Int. Cl.: G01J 5/02, G01J 5/04, A61B 5/01

(54) **AN IR THERMOMETER FOR MAGNETIC INDUCTION IDENTIFICATION PROBE CAP**

(30) Priority: 08.02.2018 CN 201820222976 U
(71) Applicant: Famidoc Technology Co., Ltd, 523853 Dongguan Guangdong Province (CN)
(72) Inventor: Cao, Liang, Shenzhen, Guangdong (CN)
(74) Representative: Cabinet Chaillot

(57) **Abstract**

This invention discloses an infrared thermometer for magnetic induction identification probe cap, including the body of infrared thermometer, at the upper end of which is a temperature probe designed with a cap, of which the inner side wall is beset with a magnet block; in the infrared thermometer body at lower end of temperature probe is a magnetic induction element connected with the main control unit of infrared thermometer body; when the cap covers the temperature probe or is removed there-from, the magnetic induction between magnet block and magnetic induction element enables magnetic induction output control signal. The main control unit of infrared thermometer body turns on the magnetic induction identification output control; for the infrared thermometer applicable for both forehead temperature measurement and ear canal temperature measurement, the magnetic induction identification cap switches between the forehead temperature measurement and ear canal temperature measurement modes.

## Description

### Field of Invention

This invention involves the field of temperature measuring device, especially an infrared thermometer for magnetic induction identification probe cap.

### Background of Invention

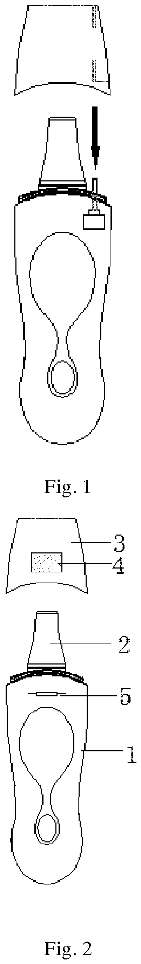

Thermometer is an extremely common and frequently used kind of temperature measuring device. Under normal circumstances, one may feel sick when his/her body temperature exceeds 37.5°C, so many people deploy thermometers in their homes. With the advancement of technologies, a great many types of new thermometers have been developed. Electronic thermometer and infrared thermometer; by taking advantage of the identified relation between physical parameters (e.g. resistance, voltage, and current, etc.) of some substances and ambient temperature, electronic thermometer shows body temperature digitally, featuring clear readings and good portability. Its shortage lies in the fact that the accuracy of indicated value is affected by electronic elements and battery operation, etc. infrared thermometers include thermometers designed exclusively for ear temperature and solely for forehead temperature. Since the liquid in ear canals of users with otitis media may significantly impair the accuracy of IR ear thermometer, IR ear thermometer is not suitable for them. Where the room temperature is above 25°C and below 20°C, IR forehead thermometer may frequently be affected by ambient temperature; for instance, sweating, fanning and air conditioning, etc. may affect the determined forehead temperature to a certain extent. For this reason, relevant technology development combines IR ear temperature and IR forehead temperature measurements in one infrared thermometer. Infrared thermometers designed for measurement of both ear temperature and forehead temperature are normally designed with removable caps for preventing faulty operation or supporting the automatic judgment mode. At present, the automatic induction & identification of cap is substantially realized in the following manner: Tact Switch or other devices are controlled for state switching after physical deformation; then, the cap is identified after MCU identification, as shown in Fig. 1 below; this scheme requires a lot of accessories, which make trouble in assembly; moreover, mechanical structure may frequently goes wrong.

### Content of invention

To make up for the defects of above-noted prior arts, this invention offers an infrared thermometer for magnetic induction identification probe cap.

The technical scheme for this invention: An infrared thermometer for magnetic induction identification probe cap, which is characterized by the fact that it includes the body of infrared thermometer, at the upper end of which is a temperature probe designed with a cap, of which the inner side wall is beset with a magnet block; in the infrared thermometer body at lower end of temperature probe is a magnetic induction element connected with the main control unit of infrared thermometer body; when the said cap covers the temperature probe or is removed there-from, the magnetic induction between magnet block and magnetic induction element enables magnetic induction output control signal.

Preferably, the described body of infrared thermometer is applicable for measurement of forehead temperature and ear canal temperature, solely for forehead temperature measurement or solely for ear canal temperature measurement.

Preferably, the said magnetic induction element is a reed switch or Hall sensor.

Preferably, the said magnetic induction output control signal includes magnetic induction output identification cap removal; the magnet block and magnetic induction element of cap performs induced output of startup control signal; when cap covers the temperature probe, the magnetic induction outputs power-off control signal; the magnetic induction identification output startup and power-off control signals are used for the infrared thermometer for forehead temperature measurement or ear canal temperature measurement.

Preferably, the said magnetic induction output control signal includes the main control unit output forehead temperature measurement mode of infrared thermometer body identified by magnetic induction when the cap covers temperature probe; the main control unit output ear canal temperature measurement mode of infrared thermometer body based on the magnetic induction between magnet block on cap and magnetic induction element on infrared thermometer body; the switchover between magnetic induction identification output forehead temperature measurement mode and ear canal temperature measurement mode, which is applicable to infrared thermometer that is applicable for both forehead temperature measurement and ear canal temperature measurement.

The infrared thermometer with the mentioned technical solution of magnetic induction identification probe cap replaces common mechanical probe pin through magnetic induction identification output control signal, as shown in Fig. 1. By means of magnetic induction, the inner wall of cap is beset with magnet block, while corresponding magnetic induction elements are arranged in the body of infrared thermometer for concealed induction, which contributes to more concise appearance. The main control unit of infrared thermometer body controls startup and power-off through magnetic induction identification output so as to replace traditional startup and power-off keys. Magnetic induction identifies startup and power-off; this has application in infrared thermometers designed exclusively for forehead temperature measurement or ear canal temperature measurement. For the infrared thermometer applicable for both forehead temperature measurement and ear canal temperature measurement, the magnetic induction identification switches between the forehead temperature measurement and ear canal temperature measurement modes. Mode switching is needed because the built-in algorithm of forehead temperature measurement is different from that of ear canal temperature measurement. Magnetic induction identification cap is used to replace common mechanical probe pin. This technical solution is characterized by more efficient, easier operation and longer service life.

### Description of Drawings

Fig. 1 is the structural schematic diagram of switching temperature measurement mode scheme through traditional probe contact connection key.
Fig. 2 is the structural schematic diagram of identifying the output control signal through magnetic induction by this invention.

### Specific Embodiments

This invention is further demonstrated below based on the attached drawings and specific embodiments.

Fig. 2 shows an infrared thermometer with magnetic induction identification probe cap that includes the body of infrared thermometer 1, at the upper end of the body of infrared thermometer 1 is a temperature probe 2 designed with a cap 3, of which the inner side wall is beset with a magnet block 4; in the infrared thermometer body at lower end of temperature probe 3 is a magnetic induction element 5 connected with the main control unit of infrared thermometer body 1; when the said cap 3 covers the temperature probe 2 or is removed therefrom, the magnetic induction between magnet block 4 and magnetic induction element 5 enables magnetic induction output control signal.

Preferably, the described body of infrared thermometer is applicable for measurement of forehead temperature and ear canal temperature, solely for forehead temperature measurement or solely for ear canal temperature measurement.

Preferably, the said magnetic induction element is a reed switch or Hall sensor.

Preferably, magnetic induction output control signal includes magnetic induction output identification cap 3 removal; the magnet block 4 and magnetic induction element of cap performs induced output of startup control signal; when cap 3 covers the temperature probe 2, the magnetic induction outputs power-off control signal; the magnetic induction identification output startup and power-off control signals are used for the infrared thermometer for forehead temperature measurement or ear canal temperature measurement.

The magnetic induction output control signal includes the main control unit output forehead temperature measurement mode of infrared thermometer body identified by magnetic induction when the cap 3 covers temperature probe 2; the main control unit output ear canal temperature measurement mode of infrared thermometer body 1 based on the magnetic induction between magnet block 4 on cap 3 and magnetic induction element 5 on infrared thermometer body 1; the switchover between magnetic induction identification output forehead temperature measurement mode and ear canal temperature measurement mode, which is applicable to infrared thermometer that is applicable for both forehead temperature measurement and ear canal temperature measurement.

By dint of magnetic induction, the inner wall of cap 3 is beset with magnet block 4, while corresponding magnetic induction elements 5 are arranged in the body of infrared thermometer 1 for concealed induction, which contributes to more concise appearance. The main control unit of infrared thermometer body 1 controls startup and power-off through magnetic induction identification output so as to replace traditional startup and power-off keys. Magnetic induction identifies startup and power-off; this has application in infrared thermometers designed exclusively for forehead temperature measurement or ear canal temperature measurement. For the infrared thermometer applicable for both forehead temperature measurement and ear canal temperature measurement, the magnetic induction identification switches between the forehead temperature measurement and ear canal temperature measurement modes. Mode switching is needed because the built-in algorithm of forehead temperature measurement is different from that of ear canal temperature measurement. Magnetic induction identification cap 3 is used to replace traditional cap probe mechanical key or body key. The technical scheme is characterized by more efficient and easier operation, and longer service life.

The foregoing embodiments of this invention are merely intended to clearly describe the invention, but not to restrict the embodiment method for the invention. The obvious changes or modifications derived from the essential spirit of this invention are still within the protection coverage of the invention.

## Claims

1. An infrared thermometer for magnetic induction identification probe cap, which is **characterized by** the fact that it includes the body of infrared thermometer (1), at the upper end of which is a temperature probe (2) designed with a cap (3), of which the inner side wall is beset with a magnet block (4); in the infrared thermometer body at lower end of temperature probe (2) is a magnetic induction element (5) connected with the main control unit of infrared thermometer body; when the said cap (3) covers the temperature probe (2) or is removed there-from, the magnetic induction between magnet block and magnetic induction element enables magnetic induction output control signal.

2. The infrared thermometer for magnetic induction identification probe cap as claimed in Claim 1, which is **characterized by** the fact that the said infrared thermometer body (1) is an infrared thermometer applicable for both forehead temperature measurement and ear canal temperature measurement, an infrared thermometer solely suitable for forehead temperature measurement or an infrared thermometer exclusively applicable for ear canal temperature measurement.

3. The infrared thermometer for magnetic induction identification probe cap as claimed in Claim 1, which is **characterized by** the fact that the said magnetic induction element (5) is a reed switch or Hall sensor.

4. The infrared thermometer for magnetic induction identification probe cap as claimed in Claim 1, which is **characterized by** the fact that the said magnetic induction output control signal includes magnetic induction output identification cap (3) removal; the magnet block (4) and magnetic induction element of cap (3) performs induced output of startup control signal; when cap (3) covers the temperature probe (2), the magnetic induction outputs power-off control signal; the magnetic induction identification output startup and power-off control signals are used for the infrared thermometer for forehead temperature measurement or ear canal temperature measurement.

5. The infrared thermometer for magnetic induction identification probe cap as claimed in Claim 1, which is **characterized by** the fact that the said magnetic induction output control signal includes the main control unit output forehead temperature measurement mode of infrared thermometer body (1) identified by magnetic induction when the cap (3) covers temperature probe (2); the main control unit output ear canal temperature measurement mode of infrared thermometer body (1) based on the magnetic induction between magnet block (4) on cap (3) and magnetic induction element (5) on infrared thermometer body (1); the switchover between magnetic induction identification output forehead temperature measurement mode and ear canal temperature measurement mode, which is applicable to infrared thermometer that is applicable for both forehead temperature measurement and ear canal temperature measurement.
